# EUROPÄISCHE PATENTSCHRIFT

(11) **EP 3 548 983 B1**
(45) Veröffentlichungstag und Bekanntmachung des Hinweises auf die Patenterteilung: **10.04.2024**
(21) Anmeldenummer: 17805148.8
(22) Anmeldetag: 17.11.2017
(51) Int. Cl.: G05G 1/02

(54) **BEDIENVORRICHTUNG MIT WIPPELEMENT ZUM BEDIENEN VON ZUMINDEST EINEM ELEKTRISCHEN GERÄT, KRAFTFAHRZEUGBAUTEIL MIT EINER BEDIENVORRICHTUNG, KRAFTFAHRZEUG, SOWIE VERFAHREN ZUM BEDIENEN EINER BEDIENVORRICHTUNG**
CONTROL DEVICE COMPRISING A ROCKER ELEMENT FOR CONTROLLING AT LEAST ONE ELECTRICAL DEVICE, MOTOR VEHICLE COMPONENT HAVING A CONTROL DEVICE, MOTOR VEHICLE, AND METHOD FOR OPERATING A CONTROL DEVICE
DISPOSITIF DE COMMANDE MUNI D'UN ÉLÉMENT BASCULANT POUR LA COMMANDE D'AU MOINS UN APPAREIL ÉLECTRIQUE, COMPOSANT DE VÉHICULE AUTOMOBILE MUNI D'UN DISPOSITIF DE COMMANDE, VÉHICULE AUTOMOBILE, AINSI QUE PROCÉDÉ DE COMMANDE D'UN DISPOSITIF DE COMMANDE

(30) Priorität: 05.12.2016 DE 102016123411
(43) Veröffentlichungstag der Anmeldung: 09.10.2019
(73) Patentinhaber: Valeo Schalter und Sensoren GmbH, 74321 Bietigheim-Bissingen (DE)
(72) Erfinder: INTINI, Onofrio, 74321 Bietigheim-Bissingen (DE); VAJDA, Norbert, 8200 Veszprem (HU); GELENCSER, Jozsef, 8200 Veszprem (HU)
(86) Internationale Anmeldenummer: PCT/EP2017/079640
(87) Internationale Veröffentlichungsnummer: WO 2018/104033

(56) Entgegenhaltungen:
- WO-A1-2010/094984
- WO-A2-02/37516
- DE-A1- 4 400 772
- DE-A1- 19 729 342
- DE-A1-102005 049 848
- DE-A1-102013 006 414
- DE-U1- 9 312 587
- DE-U1-202008 002 960

## Beschreibung

Die Erfindung betrifft eine Bedienvorrichtung zum Bedienen von zumindest einem elektrischen Gerät in einem Kraftfahrzeug gemäß dem Oberbegriff des Anspruchs 1. Die Bedienvorrichtung weist ein Bedienelement und eine Leiterplatte mit einer ersten Seite auf, auf welcher ein Schaltelement angeordnet ist. Bei einem Betätigen des Bedienelements ist das Schaltelement schaltbar. Ferner betrifft die Erfindung ein Kraftfahrzeugbauteil mit einer Bedienvorrichtung. Ferner betrifft die Erfindung ein Kraftfahrzeug mit einem Kraftfahrzeugbauteil.

Das Interesse richtet sich vorliegend insbesondere auf Bedienvorrichtungen für Kraftfahrzeuge. Derartige Bedienvorrichtungen sind in unterschiedlichen Ausführungsformen aus dem Stand der Technik bekannt. Solche Bedienvorrichtungen umfassen üblicherweise ein Bedienelement, welches zum Durchführen einer Bedienhandlung betätigbar ist. Die Betätigung kann dabei beispielsweise mit zumindest einem Finger oder einem entsprechenden Eingabegerät erfolgen. Die Bedieneingabe kann mit einer entsprechenden Erfassungseinrichtung erfasst werden. Infolge der erfassten Bedienhandlung kann ein entsprechendes Steuersignal ausgegeben werden, mit dem eine der Bedienvorrichtung zugeordnete Funktionseinrichtung des Kraftfahrzeugs, insbesondere eines elektrischen Geräts des Kraftfahrzeugs, angesteuert werden kann. Eine solche Funktionseinrichtung kann beispielsweise ein Informations- und Unterhaltungssystem, ein Navigationssystem, eine Klimaanlage oder dergleichen sein. Insbesondere aus dem Kraftfahrzeugbau sind dabei Bedienelemente bekannt, welche beispielsweise an einer Lenkhandhabe oder an einer Mittelkonsole verbaut sind. Insbesondere ist hierbei für jedes elektrische Gerät beziehungsweise für jede Funktion eines elektrischen Gerätes eine separate Taste, Wippe oder Walze verbaut. Dies sorgt dafür, dass insbesondere bei immer mehr komplexeren Kraftfahrzeugen mit mehr elektrischen Geräten beziehungsweise Funktionen mehr separate Tasten, Wippen oder Walzen zur Verfügung gestellt werden müssen. Dies kann unübersichtlich werden und insbesondere auch bei sicherheitsrelevanten Funktionen zu unerwünschter Fehlbedienung führen.

Eine Bedienvorrichtung mit Merkmalen wie im Oberbegriff des Anspruchs 1 genannt ist aus dem Dokument DE 44 00 772 A1 bekannt.

Es ist Aufgabe der vorliegenden Erfindung, eine Bedienvorrichtung, ein Kraftfahrzeugbauteil, ein Kraftfahrzeug und ein Verfahren zum Bedienen einer Bedienvorrichtung zu schaffen, um eine möglichst komfortable und sichere Bedienung zu ermöglichen.

Diese Aufgabe wird erfindungsgemäß durch eine Bedienvorrichtung, ein Kraftfahrzeugbauteil mit einer Bedienvorrichtung und ein Kraftfahrzeug mit den Merkmalen gemäß den jeweiligen unabhängigen Ansprüchen gelöst.

Eine erfindungsgemäße Bedienvorrichtung zum Bedienen von zumindest einem elektrischen Gerät in einem Kraftfahrzeug ist in Anspruch 1 definiert. Sie umfasst zumindest ein Bedienelement und eine Leiterplatte, mit einer ersten Seite. Auf der ersten Seite der Leiterplatte ist ein Schaltelement angeordnet, wobei bei einem Betätigen des Bedienelements das Schaltelement schaltbar ist.

Ein wesentlicher Gedanke der Erfindung ist, dass die Leiterplatte zwischen dem Bedienelement und dem Schaltelement angeordnet ist. Es ist die erste Seite der Leiterplatte dem Bedienelement abgewandt und eine der ersten Seite gegenüberliegenden zweiten Seite des Bedienelements ist dem Bedienelement zugewandt. Die Bedienvorrichtung weist ein separates Wippelement auf, welches abhängig von einer Betätigung des Bedienelements durch eine dadurch initiierte Wippbewegung zur Betätigung des Schaltelements ausgebildet ist. Dies hat den Vorteil, dass bei einer Kraftausübung auf das Bedienelement, diese Kraft über das Wippelement besonders sicher und komfortabel auf das Schaltelement übertragen werden kann, so dass das Schaltelement besonders zuverlässig schaltet. Es ist dadurch ermöglicht, dass auf der zweiten Seite der Leiterplatte weitere Komponenten verbaut werden können, welche dann hochfunktionell und mit benachbarten weiteren Elementen wechselwirken zu können, wobei dies sehr bauraumminimiert ermöglicht ist. Dadurch kann eine besonders zuverlässige und komfortable Bedienvorrichtung geschaffen werden, welche eine besonders kompakte Bauweise aufweist.

Die Bedienvorrichtung kann in einem Kraftfahrzeug eingesetzt werden. Die Bedienvorrichtung kann in einem Innenraum des Kraftfahrzeugs, beispielsweise in der Mittelkonsole oder an dem Armaturenbrett, insbesondere an einer Lenkhandhabe, angeordnet sein. Die Bedienvorrichtung umfasst das Bedienelement, welches beispielsweise von dem Fahrer des Kraftfahrzeugs oder einem weiteren Insassen des Kraftfahrzeugs bedient werden kann. Zum Durchführen der Bedienhandlung, bei der das Bedienelement bedient wird, kann der Fahrzeuginsasse beispielsweise mit zumindest einem Finger oder einem entsprechenden Eingabegerät auf das Bedienelement drücken oder dieses berühren. Mithilfe der Erfassungseinrichtung der Bedienvorrichtung kann diese Berührung beziehungsweise die Bedienhandlung erfasst werden. In Abhängigkeit von der mit der Erfassungseinrichtung erfassten Bedienhandlung kann dann ein entsprechendes Steuersignal ausgegeben werden und das zumindest eine elektrische Gerät beziehungsweise eine Funktion des elektrischen Geräts beziehungsweise mehrere elektrische Geräte können entsprechend angesteuert werden.

Insbesondere kann eine Kraft, die der Bediener auf das Bedienelement, beispielsweise durch das Drücken, ausübt, auf das Schaltelement übertragen werden. Das Schaltelement ist insbesondere derart ausgebildet, dass es erst bei einem vorbestimmten Kraft-Schwellwert schaltet, dies bedeutet insbesondere einen Stromkreislauf schließt, sodass das zumindest eine elektrische Gerät bedient werden kann. Insbesondere dient der Kraft-Schwellwert dazu, dass dem Bediener eine haptische Rückmeldung gegeben wird, dass eine Bedienung des zumindest einen elektrischen Geräts stattgefunden hat. Insbesondere ist vorgesehen, dass die sich Kraft, welche der Bediener auf das Bedienelement ausübt, auf das separate Wippelement überträgt. Dadurch wird eine Wippbewegung des Wippelements initiiert, wobei insbesondere vorgesehen sein kann, dass das Wippelement mit dem Schaltelement gekoppelt ist. Somit findet über die Wippbewegung des Wippelements eine Kraftübertragung an das Schaltelement statt. Über das Wippelement ist ebenfalls die haptische Rückmeldung des Schaltelements an den Bediener übertragbar, sodass dem Bediener nach Schalten des Schaltelements eine haptische Rückmeldung gegeben werden kann. Mittels dieser Ausgestaltungsform ist somit auf der zweiten Seite der Leiterplatte Bauraum geschaffen. In diesem Bauraum können weitere Elemente angeordnet werden, welche beispielsweise einer weiteren Steuerung beziehungsweise Verbesserung der Bedienvorrichtung dienen können. Auf diese Weise ist eine komfortable Bedienung der Bedienvorrichtung ermöglicht.

Erfindungsgemäß ist vorgesehen, dass das Wippelement zumindest ein erstes Wippteil und ein damit gelenkig verbundenes zweites Wippteil aufweist. Ein erstes Verbindungselement der Bedienvorrichtung ist insbesondere mit dem ersten Wippteil kontaktiert und ein zweites Verbindungselement des Bedienelements ist mit dem zweiten Wippteil kontaktiert. Mittels dieser Ausgestaltungsform kann ein einfaches, aber dennoch zufälliges Wippelement bereitgestellt werden. Insbesondere kann somit eine Kraft, die auf das Bedienelement der Bedienvorrichtung wirkt, über das erste Verbindungselement und das zweite Verbindungselement auf das Wippelement übertragen werden. Somit kann ein redundantes System bereitgestellt werden, sodass bei beispielsweise einem Ausfall eines der Verbindungselemente über das zweite Verbindungselement weiterhin eine Bedienung des elektrischen Geräts realisiert werden kann.

Erfindungsgemäß soll das Wippelement mit einem Wippgelenk, an welchem das erste Wippteil mit dem zweiten Wippteil gelenkig verbunden ist, zum Schalten des Schaltelements mit dem Schaltelement koppelbar sein. Insbesondere am Wippgelenk ist die Kraftübertragung des Bedienelements an das Wippelement sehr vorteilhaft. Es hat sich daher bevorzugt herausgestellt, dass am Wippgelenk das Schaltelement koppelbar ist. Dadurch kann mit einem kurzen Betätigungsweg, und/oder mit einem geringen Kraftaufwand das Schaltelement betätigt werden.

Bei dieser Ausgestaltungsform findet insbesondere eine Knickbewegung des Wippelements statt. Mittels der Kraftausübung der Verbindungselemente auf das erste Wippteil wird dieses an der Verbindungsstelle zum Verbindungselement in eine erste Richtung gedrückt. Am Wippgelenk wird das erste Wippteil oder das zweite Wippteil in die zur ersten Richtung entgegengesetzten zweiten Richtung gedrückt, da eine Hebelkraft auf das erste Wippteil durch das Verbindungselement auf einer ersten Seite des Wippteils ausgeübt wird und somit die zweite Seite des Wippteils in die entgegengesetzte Richtung gedrückt wird. Somit findet insgesamt eine Knickbewegung bzw. Faltbewegung bzw. Zusammenklappbewegung des Wippelements statt. Zur Betätigung des Wippelements wirken die Verbindungselemente gleichzeitig in die gleiche Richtung, sodass durch Betätigen der beiden Wippteile ein Zusammenklappen um das Wippgelenk erfolgt. Insbesondere am Wippgelenk ist das Schaltelement mit dem Wippelement gekoppelt, sodass insbesondere am Wippgelenk die Kraftübertragung am größten ist, wodurch ein besonders komfortables Schalten der Bedienvorrichtung durchgeführt werden kann.

Insbesondere kann vorgesehen sein, dass das Wippgelenk als ein Scharnier ausgebildet ist. Hier kann vorgesehen sein, dass die zwei Wippteile mit einem Metallstift am Wippgelenk verbunden sind. Insbesondere kann beispielsweise jedes Wippteil Zähne bzw. Finger aufweisen, welche mit Ausnehmungen auf dem anderen Wippteil korrespondieren. Die zwei Wippteile können so ineinander gesteckt werden, dass ein Metallstift entlang der Rotationsachse des Wippelements eingesteckt wird. Ebenfalls möglichst ist, dass die beiden Scharnierteile zusammengesteckt werden. Hierzu können die Wippteile entsprechende Nuten und Federn aufweisen, sodass diese um die Rotationsachse des Wippelements drehbar sind. Ebenfalls möglich ist, dass es sich bei dem Wippelement um ein Filmscharnier handelt.

In einer weiteren vorteilhaften Ausgestaltungsform kann das Wippelement als eine einstückige Platte ausgebildet sein. An einem ersten Ende des Wippelements ist das Wippelement mit einem Verbindungselement gekoppelt und an einem zweiten Ende des Wippelements mit einem Schaltelement. Bei einem Betätigen des Bedienelements kann so eine Kraft auf das erste Ende des Wippelements übertragbar sein und das Wippelement um ein zwischen den Enden liegendes Wipplager schwenkbar sein. Die so entstandene Hebelkraft kann auf das Schaltelement am zweiten Ende des Wippelements übertragbar sein. Mittels dieser Ausgestaltungsform kann besonders bauteil- und materialsparend das Wippelement zur Verfügung gestellt werden.

In einer vorteilhaften Ausgestaltungsform kann das Bedienelement zumindest ein Verbindungselement, insbesondere zwei Verbindungselemente, insbesondere vier Verbindungselemente, aufweisen, mit welchem eine Betätigung des Bedienelements an das Wippelement übertragbar ist. Über das zumindest eine Verbindungselement kann somit in vorteilhafter Weise die Kraft, welche auf das Bedienelement durch den Bediener ausgeübt wird, auf das Wippelement sicher und toleranzfrei übertragen werden. Insbesondere bei der Ausgestaltungsform mit zwei Verbindungselementen beziehungsweise mit vier Verbindungselementen kann eine verbesserte und mechanisch zuverlässige sowie präzise Kraftverteilung auf das Wippelement durchgeführt werden, sodass besonders sicher und komfortabel die Bedienvorrichtung betätigbar ist, insbesondere das Wippelement in die Wippbewegung versetzt werden kann, sodass das Schaltelement schaltet.

Gemäß einer weiteren vorteilhaften Ausgestaltungsform kann das Verbindungselement stiftartig ausgebildet sein. Mittels des stiftartigen Verbindungselements kann auf einfache Art und Weise und besonders materialsparend das Verbindungselement beziehungsweise die Verbindungselemente für die Bedienvorrichtung bereitgestellt werden, da es auch relativ dünn ausgebildet sein kann. Insbesondere lässt sich mittels der starren stiftartigen Verbindungselemente besonders einfach und ohne Kraftverlust die Kraft, welche auf das Bedienelement ausgeübt wird, auf das Wippelement übertragen.

Es hat sich weiterhin als vorteilhaft erwiesen, wenn das Verbindungselement sich beidseits der Leiterplatte, insbesondere durch eine Durchführung in der Leiterplatte, erstreckt. Mittels dieser Ausgestaltungsform kann das Wippelement auf zwei Seiten mit dem Verbindungselement gekoppelt werden. Dies führt zu einer verbesserten Kraftverteilung und damit zu einer sichereren und komfortableren Bedienung der Bedienvorrichtung beziehungsweise zu einer sicheren Initiierung der Wippbewegung des Wippelements. Insbesondere mittels der Durchführung kann eine Führung für das Verbindungselement geschaffen werden, sodass das Bedienen der Bedienvorrichtung noch sicherer durchgeführt werden kann. Des Weiteren kann mittels der Durchführungen eine noch kompaktere Bauweise der Bedienanordnung geschaffen werden, so dass Bauraum eingespart werden kann.

Gemäß einer weiteren vorteilhaften Ausgestaltungsform kann die Bedienvorrichtung zumindest einen kapazitiven Sensor zum Erfassen einer Berührstelle eines Nutzers, insbesondere eines Fingers eines Nutzers, auf einer Bedienoberfläche des Bedienelements aufweisen. Dadurch kann die Berührung beziehungsweise die Bedienhandlung erfasst werden. Mithilfe des kapazitiven Sensors ist es ebenfalls ermöglicht, dass die Position, an welcher das Bedienelement berührt wird, erfasst wird. Somit kann verhindert werden, dass ein ungewolltes Berühren durch beispielsweise einem anderen Körperteil oder durch einen Gegenstand und ein damit ungewolltes Bedienen des zumindest einen elektrischen Geräts durchgeführt wird. Dies bedeutet, dass beispielsweise nur bei der Erfassung eines Fingers und bei Betätigen, das bedeutet Drücken, des Bedienelements die Bedienvorrichtung das zumindest eine elektrische Gerät bedient. Somit kann ein ungewolltes Bedienen des elektrischen Geräts verhindert werden.

Es hat sich weiterhin als vorteilhaft erwiesen, wenn eine Bedienoberfläche des Bedienelements unterbrechungsfrei ausgebildet ist. Dies bedeutet, dass insbesondere die Bedienoberfläche keine Spalten aufweist, in welchen sich beispielsweise Schmutz oder andere Partikel sammeln können. Dies hat den Vorteil, dass die Lebensdauer der Bedienvorrichtung insgesamt erhöht wird, da kein Schmutz in die Bedienvorrichtung eindringen kann. Des Weiteren kann mittels der unterbrechungsfreien Bedienoberfläche der Komfort der Bedienvorrichtung für den Bediener gesteigert werden.

Es kann insbesondere vorgesehen sein, dass die Bedienoberfläche unterbrechungsfrei ist und Erhebungen beziehungsweise Vertiefungen aufweist. Insbesondere sind die Erhebungen beziehungsweise Vertiefungen ergonomisch ausgebildet. Insbesondere können die Erhebungen beziehungsweise Vertiefungen dazu dienen, dem Bediener eine haptische Rückmeldung zu geben, welches elektrische Gerät beziehungsweise Funktion des elektrischen Geräts an der Berührstelle bedient werden kann. Insbesondere kann vorgesehen sein, dass jeder Funktion beziehungsweise jedem elektrischen Gerät eine Erhebung beziehungsweise eine Vertiefung auf der unterbrechungsfreien Bedienoberfläche zugeordnet ist.

Erfindungsgemäß ist vorgesehen, dass das Bedienelement zumindest ein Piktogramm aufweist. Das Piktogramm beschreibt insbesondere eine Funktion des bedienbaren elektrischen Geräts, wobei das Piktogramm erfindungsgemäß zumindest teilweise transparent ausgebildet ist. Insbesondere ist vorgesehen, dass auf der zweiten Seite der Leiterplatte ein Leuchtelement angeordnet ist, sodass das zumindest teilweise transparente Piktogramm beleuchtbar ist. Dadurch, dass das Schaltelement auf der ersten Seite der Leiterplatte angeordnet ist, ist auf der zweiten Seite der Leiterplatte insbesondere Bauraum für zumindest ein Leuchtelement. Bei dem Leuchtelement kann es sich insbesondere um eine LED (light emitting diode) handeln. Insbesondere kann so dem Bediener des Bedienelements auf einfache Art und Weise angezeigt werden, welches elektrische Gerät, beziehungsweise welche Funktion des elektrischen Geräts der Bediener beim Betätigen des Bedienelements bedient. Insbesondere kann vorgesehen sein, dass das Piktogramm auf der Bedienoberfläche ausgebildet ist, sodass der Bediener jederzeit auch bei einem Nichtbedienen der Bedienvorrichtung das Piktogramm optisch angezeigt werden kann. Durch das Konzept mit dem Verbau der Leiterplatte zwischen dem Bedienelement und dem Schaltelement können auch weitere Komponenten auf der Leiterplatte seitenspezifisch verbaut werden, um dann hochfunktionell und mit benachbarten weiteren Elementen wechselwirken zu können, wobei dies sehr bauraumminimiert ermöglicht ist.

Es ist weiterhin vorteilhaft, wenn mittels der Bedienvorrichtung eine Mehrzahl von elektrischen Geräten bedienbar ist. Das Bedienelement kann die Mehrzahl der elektrischen Geräte als örtlich voneinander getrennte Piktogramme anzeigen. Die Bedienvorrichtung kann eine Steuerungseinrichtung aufweisen, die auf Basis eines Signals eines kapazitiven Sensors das jeweilige elektrische Gerät bedient. Insbesondere kann der kapazitive Sensor durch die unterschiedliche örtliche Betätigung eines der Piktogramme durch den Nutzer, insbesondere den Finger des Nutzers, das Signal erzeugen. Es kann weiterhin vorgesehen sein, dass insbesondere die Mehrzahl der Piktogramme zumindest teilweise transparent ausgebildet ist und auf der zweiten Seite der Leiterplatte ein jeweiliges Leuchtelement für ein jeweiliges Piktogramm angeordnet ist. Somit ist das jeweilige zumindest teilweise transparente Piktogramm beleuchtbar und das jeweilige Leuchtelement kann in seiner Farbe und/oder in seiner Leuchtart unterschiedlich sein. Dies bedeutet, dass für eine Mehrzahl an zu bedienenden Funktionen eines elektrischen Geräts beziehungsweise für eine Mehrzahl zu bedienender elektrischer Geräte eine Bedienvorrichtung mit einem Bedienelement und einem Schaltelement ausreichend ist.

Mittels des kapazitiven Sensors kann eine Lokalisierung des Betätigungsortes durch den Bediener erfasst werden. Dem erfassten Ort kann eine Funktion zugeordnet werden, welche Funktionen des elektrischen Geräts beziehungsweise welches elektrische Gerät durch den Bediener bedient werden soll. Nach dem Erkennen insbesondere des Fingers des Bedieners, und nach dem Betätigen des Bedienelements kann somit die Funktion des elektrischen Geräts, beziehungsweise des gewünschten elektrischen Geräts bedient werden.

Zur besseren optischen Darstellung kann dann das jeweilige Piktogramm beispielsweise mit einer unterschiedlichen Farbe beleuchtet werden, sodass insbesondere sicherheitsrelevante Funktionen (bspw. Warnblinkeinrichtung) beispielsweise rot dargestellt werden können und nicht sicherheitsrelevante Funktionen beispielsweise grün dargestellt werden können. Ebenfalls ist es möglich, dass mittels der unterschiedlichen Farben der Zustand der unterschiedlichen Funktionen dargestellt werden kann. Beispielsweise kann eine grüne Farbe eine Information geben, dass eine Funktion gerade benutzt wird, während eine rote Farbe beispielsweise den Ausfall beziehungsweise Defekt einer Funktion darstellen kann. Ebenfalls möglich ist, dass mittels einer unterschiedlichen Leuchtart, dies bedeutet insbesondere beispielsweise durch unterschiedliches Blinken (bspw. Frequenzunterschied oder Leuchtintensität), eine Funktion beziehungsweise ein Zustand des elektrischen Geräts angezeigt werden kann. Dies ist möglich, da auf der zweiten Seite der Leiterplatte durch die Anordnung des Schaltelements auf der ersten Seite der Leiterplatte Bauraum geschaffen wurde, sodass auf der zweiten Seite der Leiterplatte entsprechend eine Steuereinrichtung beziehungsweise zumindest ein Leuchtelement angeordnet werden kann. Diese Ausgestaltungsform hat den Vorteil, dass mittels einer Bedienvorrichtung eine Mehrzahl an elektrischen Geräten, beziehungsweise eine Mehrzahl an Funktionen der elektrischen Geräte bedient werden kann. Somit kann auf einfache Art und Weise, bauteilsparend und komfortabel eine Bedienvorrichtung in einem Kraftfahrzeug bereitgestellt werden.

In einer Ausführungsform kann das Schaltelement als ein Mikroschalter oder eine Schaltmatte oder eine Schnappscheibe zum Erzeugen einer haptischen Rückmeldung ausgebildet sein.

Ein weiterer unabhängiger Aspekt der Erfindung betrifft eine Bedienvorrichtung zum Bedienen von zumindest einem elektrischen Gerät in einem Kraftfahrzeug. Die Bedienvorrichtung kann ein Bedienelement und eine Leiterplatte aufweisen, wobei die Leiterplatte eine erste Seite aufweist, auf welcher ein Schaltelement angeordnet ist. Bei einem Betätigen des Bedienelements ist das Schaltelement schaltbar. Es ist vorgesehen, dass die Bedienvorrichtung ein Wippelement aufweist, mit welchem eine Betätigung des Bedienelements auf das Schaltelement übertragbar ist, wobei das Wippelement zumindest ein erstes Wippteil und ein damit gelenkig verbundenes zweites Wippteil aufweist. Ein erstes Verbindungselement der Bedienvorrichtung ist mit dem ersten Wippteil kontaktiert und ein zweites Verbindungselement des Bedienelements ist mit dem zweiten Wippteil kontaktiert. Bei einem Betätigen des Bedienelements können somit die Wippteile durch eine Klappbewegung um ein Wippgelenk zum Kontaktieren und Schalten des Schaltelements aufeinander zubewegt werden.

Die Erfindung betrifft auch ein Kraftfahrzeugbauteil mit einer Bedienvorrichtung, wie zuvor beschrieben. Bei dem Kraftfahrzeugbauteil kann es sich insbesondere um eine Lenkhandhabe, wie ein Lenkrad, oder um eine Mittelkonsole eines Kraftfahrzeugs handeln.

Weiterhin betrifft die Erfindung ein Kraftfahrzeug mit einem Kraftfahrzeugbauteil. Das Kraftfahrzeug kann dabei insbesondere als Personenkraftwagen ausgebildet sein.

Ausführungen des Aspekts der Erfindung sind als vorteilhafte Ausführungen der weiteren Aspekte der Erfindung anzusehen
Die mit Bezug auf die erfindungsgemäße Bedienvorrichtung vorgestellten bevorzugten Ausführungsformen und deren Vorteile gelten entsprechend für das erfindungsgemäße Kraftfahrzeugbauteil und Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches eine Bedienvorrichtung aufweist;
- Fig. 2: eine schematische Perspektivansicht einer Ausführungsform der Bedienvorrichtung;
- Fig. 3: eine schematische Perspektivansicht einer Ausführungsform eines Wippelements der Bedienvorrichtung;
- Fig. 4: eine schematische Seitenansicht einer nicht erfindungsgemäßen Bedienvorrichtung; und
- Fig. 5: eine schematische Perspektivansicht einer Ausführungsform eines Kraftfahrzeugbauteils mit einer erfindungsgemäßen Bedienvorrichtung.

In den Figuren werden gleiche und funktionsgleiche Elemente mit den gleichen Bezugszeichen versehen.

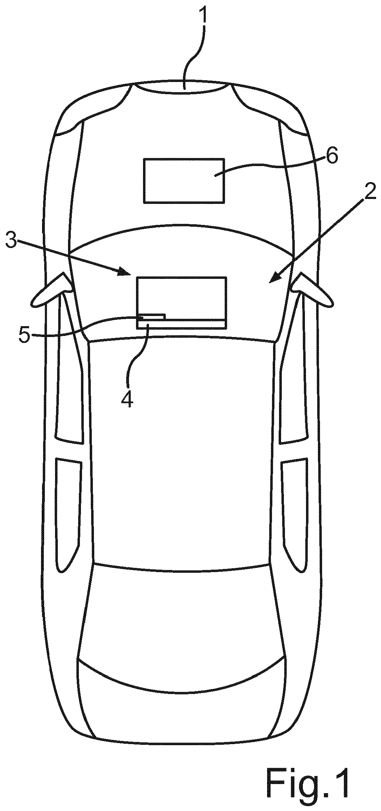

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst einen Innenraum 2, in welchem eine Bedienvorrichtung 3 angeordnet ist. Die Bedienvorrichtung 3, welche vorliegend schematisch dargestellt ist, umfasst zumindest ein Bedienelement 4, welches von einem Insassen des Kraftfahrzeugs 1 bedient werden kann. Die Bedienvorrichtung 3 kann derart in dem Innenraum 2 des Kraftfahrzeugs 1 angeordnet sein, dass das Bedienelement 4 dem Insassen des Kraftfahrzeugs 1 zugewandt ist.

Mit der Bedienvorrichtung 3 kann eine Bedienhandlung in Form der Betätigung des Bedienelements 4 erfasst werden. Zu diesem Zweck kann beispielsweise die Bedienvorrichtung 3 weiterhin eine Erfassungseinrichtung 5 aufweisen, welche insbesondere als ein berührungsempfindlicher Sensor, insbesondere als ein kapazitiver Sensor ausgebildet sein kann. Mit dieser Erfassungseinrichtung 5 kann beispielsweise eine Berührung mit zumindest einem Finger oder einem entsprechenden Eingabegerät auf der Bedienoberfläche 7 erfasst werden. Darüber hinaus kann mit der Erfassungseinrichtung 5 die Position der Berührung auf dem Bedienelement 4 erkannt werden. Falls mit der Erfassungseinrichtung 5 die Bedienhandlung beziehungsweise die Berührung des Bedienelements 4 erkannt wird, kann ein entsprechendes Steuersignal ausgegeben werden.

Insbesondere kann vorgesehen sein, dass mittels der Bedienvorrichtung 3 zumindest ein elektrisches Gerät 6 bedient werden kann. Es kann dabei vorgesehen sein, dass mit der Bedienvorrichtung 3 mehrere Funktionen des elektrischen Geräts 6 bedient werden können beziehungsweise dass mehrere elektrische Geräte 6 mit der Bedienvorrichtung 3 bedient werden können.

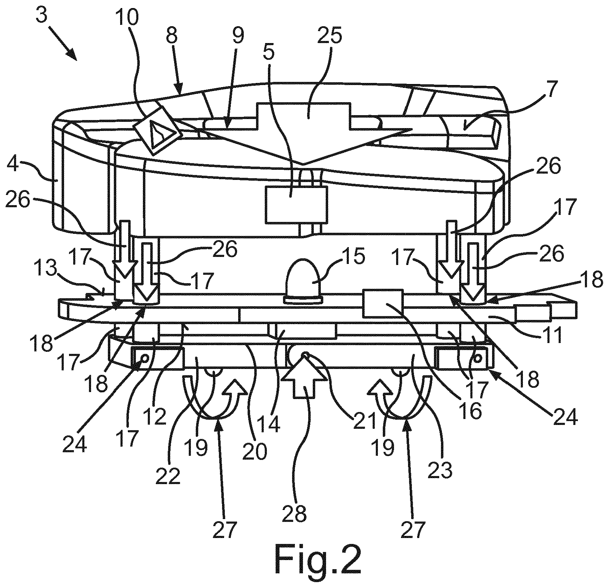

Fig. 2 zeigt eine schematische Perspektivansicht einer Ausführungsform einer erfindungsgemäßen Bedienvorrichtung 3. Die Bedienvorrichtung 3 umfasst das Bedienelement 4 sowie die Erfassungseinrichtung 5, welche insbesondere als kapazitiver Sensor ausgebildet sein kann. Das Bedienelement 4 kann dabei insbesondere eine Bedienoberfläche 7 aufweisen. Auf der Bedienoberfläche 7 können sich insbesondere Erhebungen 8 beziehungsweise Vertiefungen 9 befinden, welche dazu ausgebildet sind, einem nicht gezeigten Bediener des Bedienelements 4 eine haptische Rückmeldung zu geben, insbesondere, welches elektrische Gerät 6 vom Bediener bedient wird. Dabei kann insbesondere vorgesehen sein, dass die Erhebungen 8 beziehungsweise die Vertiefungen 9 ergonomisch angepasst sind. Die Bedienoberfläche 7 des Bedienelements 4 kann insbesondere unterbrechungsfrei ausgebildet sein.

Weiterhin kann vorgesehen sein, dass auf der Bedienoberfläche 7 zumindest ein Piktogramm 10, beziehungsweise insbesondere mehrere Piktogramme 10, ausgebildet sind. Die Piktogramme 10 dienen insbesondere dazu, eine Funktion des bedienbaren elektrischen Geräts 6 beziehungsweise mehrere Funktionen von einer Mehrzahl von bedienbaren elektrischen Geräten 6 zu beschreiben. Insbesondere können dabei die Piktogramme 10 zumindest teilweise transparent ausgebildet sein.

Die Bedienvorrichtung 3 weist weiterhin eine Leiterplatte 11 auf. Die Leiterplatte 11 umfasst insbesondere eine erste Seite 12 und eine zweite Seite 13. Auf der ersten Seite 12 ist ein Schaltelement 14 angeordnet. Das Schaltelement 14 ist insbesondere als ein Mikroschalter oder eine Schaltmatte oder eine Schnappscheibe ausgebildet und kann eine haptische Rückmeldung für den Bediener erzeugen.

Auf der zweiten Seite 13 der Leiterplatte 11 kann insbesondere ein Leuchtelement 15 angeordnet sein. Das Leuchtelement 15 ist insbesondere derart ausgebildet, dass es das Piktogramm 10 beziehungsweise die Mehrzahl der Piktogramme 10 beleuchten kann. Insbesondere kann vorgesehen sein, dass auf der zweiten Seite 13 der Leiterplatte 11 eine Mehrzahl von Leuchtelementen 15 angeordnet ist, sodass bei einer Mehrzahl von Piktogrammen 10 jedem Piktogramm ein jeweiliges Leuchtelement 15 zugeordnet ist. Das Leuchtelement 15 kann insbesondere derart angesteuert werden, dass es in einer unterschiedlichen Farbe beziehungsweise in unterschiedlichen Leuchtarten leuchten kann. Damit können die Mehrzahl an Piktogrammen 10 unterschiedlich beleuchtet werden. Beispielsweise kann das Leuchtelement 15 als eine LED (light emitting diode) ausgebildet sein. Als Leuchtart kann beispielsweise verstanden werden, dass das Leuchtelement 15 unterschiedlich schnell blinkt beziehungsweise in seiner Leuchtintensität sich unterscheidet.

Das Piktogramm 10 kann beispielsweise bei sicherheitsrelevanten Funktionen mit einer roten Farbe beleuchtet werden. Ebenfalls möglich ist, dass der Zustand einer Funktion, beispielsweise ob das elektrische Gerät an- oder ausgeschaltet ist beziehungsweise defekt ist, ebenfalls durch eine Farbe des Leuchtelements 15 dargestellt werden kann.

Die Leiterplatte 11 umfasst weiterhin eine Steuereinrichtung 16. Die Steuereinrichtung 16 ist insbesondere dazu ausgebildet, ein Signal der Erfassungseinrichtung 5 zu erfassen und entsprechend das elektrische Gerät 6 anzusteuern.

Die Bedienvorrichtung 3 umfasst insbesondere ein Verbindungselement 17, insbesondere vier separate Verbindungselemente 17. Die Verbindungselemente 17 sind insbesondere stiftartig ausgebildet. Weiterhin verlaufen die Verbindungselemente 17 insbesondere beidseits der Leiterplatte 11. Insbesondere sind die Verbindungselemente 17 mit dem Bedienelement 4 gekoppelt und verlaufen durch insbesondere jeweils eine Durchführung 18 der Leiterplatte 11.

Der ersten Seite 12 der Leiterplatte 11 ist ein separates Wippelement 20 zugewandt. Das Wippelement 20 weiste ein erstes Wippteil 22 und ein zweites Wippteil 23 auf. Die Wippteile 22 und 23 sind über ein Wippgelenk 21 gekoppelt. Das erste Wippteil 22 und das zweite Wippteil 23 weisen eine Rotationsachse 19 auf. Die Wippteile 22, 23 sind um die jeweilige Rotationsachse 19 drehbar. An einem jeweiligen, dem Wippgelenk 21 abgewandten ersten Ende 24 der Wippteile 22, 23 sind die jeweiligen Wippteile 22, 23 mit den Verbindungselementen 17 koppelbar. Das Wippelement 20 wiederum ist am Wippgelenk 21 mit dem Schaltelement 14 koppelbar.

Zum Bedienen des zumindest einen elektrischen Geräts 6 drückt der Bediener auf das Bedienelement 4, insbesondere auf die Bedienoberfläche 7 der Bedienvorrichtung 3. Insbesondere die Erfassungseinrichtung 5 erfasst eine Berührung und insbesondere die Berührstelle des Fingers. Abhängig von der Lokalisierung des Fingers anhand des erfassten Signals der Erfassungseinrichtung 5 bestimmt die Steuereinrichtung 16 den Bedienort. Eine auf die Bedienvorrichtung 3 ausgeübte Kraft, welche durch den Kraftpfeil 25 dargestellt ist, wird auf die Verbindungselemente 17 übertragen. Eine übertragene Kraft, welche wiederum durch die Kraftpfeile 26 dargestellt ist, wird durch die Leiterplatte 11 auf die ersten Enden 24 des Wippelements 20 übertragen. Die Verbindungselemente 17 wirken gleichzeitig auf die der Leiterplatte 11 zugewandten Oberseiten der Wippteile 22, 23 ein. Das jeweilige Wippteil 22, 23 wird um die jeweilige Rotationsachse 19 durch die ausgeübte Kraft (Hebelkraft) in die Rotation 27 um die Rotationsachse 19 versetzt. Das Wippelement 20 führt eine Knickbewegung, insbesondere am Wippgelenk 21, durch. Eine dadurch initiierte Wippbewegung 28 (Pfeildarstellung) bzw. Knickbewegung des Wippelements 20 führt zu einer Kraftausübung auf das Schaltelement 14, wodurch das Schaltelement 14 geschaltet wird, da sich das Wippgelenk 21 zu dem Schaltelement 14 hin bewegt. Die Steuereinrichtung 16 erfasst das Schaltsignal des Schaltelements 14. Zusammen mit dem Signal der Erfassungseinrichtung 5 und dem Schaltsignal des Schaltelements 14 kann die Steuereinrichtung 16 entsprechend das elektrische Gerät 6, beziehungsweise die Funktion des elektrischen Gerätes 6 steuern.

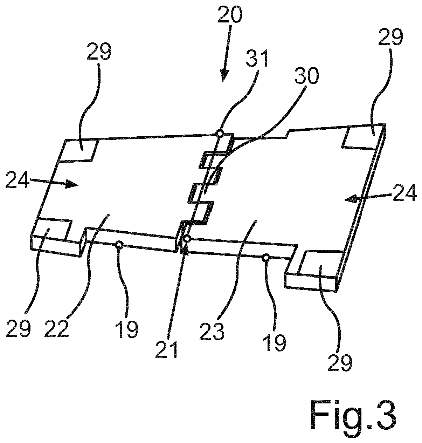

Fig. 3 zeigt eine schematische Perspektivansicht eines Ausführungsbeispiels des Wippelements 20 der Bedienvorrichtung 3. Das erste Wippteil 22 ist dabei insbesondere mit dem zweiten Wippteil 23 über das Wippgelenk 21 gekoppelt. Insbesondere an den ersten Enden 24 des Wippelements 20 können Koppelstellen 29 ausgebildet sein, welche dazu vorgesehen sind, mit den Verbindungselementen 17 gekoppelt zu werden. Die Koppelstellen 29 können Vertiefungen sein. Somit kann ein möglichst großer Hebelarm für die spätere Wippbewegung 28 bereitgestellt werden. Am Wippgelenk 21 kann insbesondere eine weitere Koppelstelle 30 vorgesehen sein, welche dazu dient, das Wippgelenk 21 mit dem Schaltelement 14 zu koppeln. Sprich bei einer Wippbewegung 28 des Wippelements 20 ist an dieser Stelle 30 das Schaltelement schaltbar gekoppelt. Das Wippgelenk 21 kann dabei derart ausgestaltet sein, dass die Wippteile 22, 23 über miteinander korrespondierende Zähne bzw. Finger und Ausnehmungen ineinander greifen. Über einen Stift 31 kann das erste Wippteil 22 und das zweite Wippteil 23 miteinander drehbar verbunden werden, sodass am Wippgelenk 21 die Wippbewegung 28 durchgeführt werden kann. Es ist ebenfalls möglich, dass die Wippteile 22, 23 mit einem Nut - und Federsystem zusammengesteckt werden können und über ein Nasen - Muldensystem kippbar gelagert sind. Ebenfalls möglich ist, dass das Wippgelenk 21 als ein Filmscharnier ausgebildet ist und an der Stelle, an welcher sich der erste Wippteil 22 mit dem zweiten Wippteil 23 gelenkig verbindet, eine Verjüngung ausgebildet ist, sodass die Wippbewegung 28 durchgeführt werden kann. Bei dieser Ausführungsform ist das Wippelement 20 dann einstückig ausgebildet.

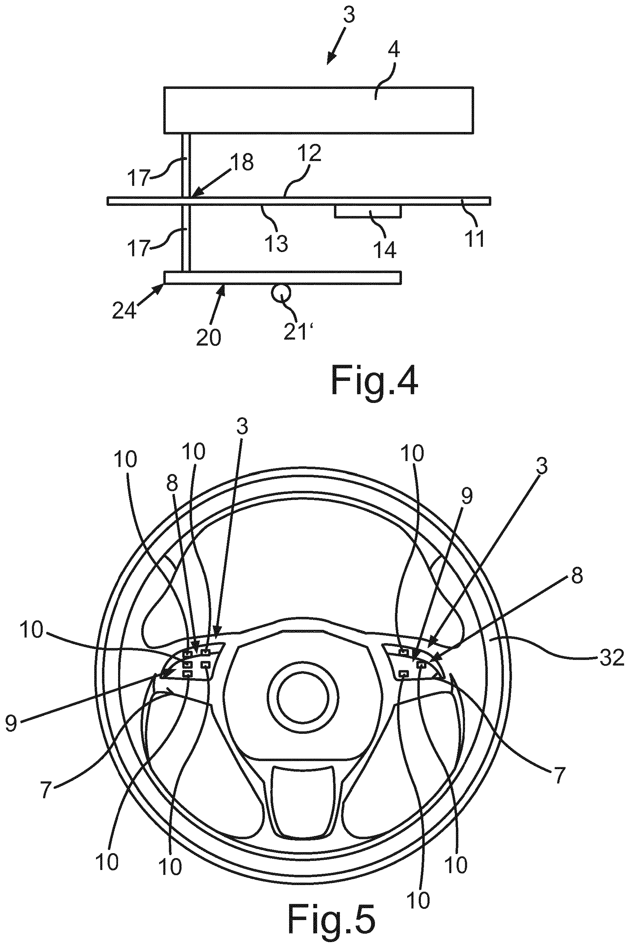

Es ist ebenfalls möglich, wie dies in Fig. 4 schematisch gezeigt ist, dass das Wippelement 20 als eine einstückige und in sich starre Platte ausgebildet ist, wobei an dem ersten Ende 24 des Wippelements 20 das Wippelement 20 mit dem Verbindungselement 17 gekoppelt ist. An einem zweiten Ende des Wippelements 20 kann das Wippelement 20 mit dem Schaltelement 14 gekoppelt sein, sodass bei einem Betätigen des Bedienelements 4 die Kraft auf das erste Ende 24 des Wippelements 20 übertragbar ist und das Wippelement 20 um ein zwischen den Enden liegendes Wipplager 21 ` schwenkbar ist. Die so entstehende Hebelkraft kann dann auf das Schaltelement 14 am zweiten Ende des Wippelements 20 übertragen werden, so dass das Schaltelement 14 schaltet.

Fig. 5 zeigt eine schematische Perspektivansicht eines Ausführungsbeispiels eines erfindungsgemäßen Kraftfahrzeugbauteils 32. Das Kraftfahrzeugbauteil 32 ist in diesem Ausführungsbeispiel als Lenkrad ausgebildet. Es ist ebenfalls möglich, dass das Kraftfahrzeugbauteil 32 beispielsweise als Mittelkonsole ausgebildet ist. Das Kraftfahrzeugbauteil 32 weist bei diesem Beispiel zwei Bedienvorrichtungen 3 auf. Die zwei Bedienvorrichtungen 3 weisen jeweils eine unterbrechungsfreie Bedienoberfläche 7 auf. Auf der jeweiligen Bedienoberfläche 7 sind eine Mehrzahl an Piktogrammen 10 angeordnet, welche unterschiedliche Funktionen eines elektrischen Gerätes 6 beziehungsweise unterschiedliche elektrische Geräte 6 beschreiben können. Die Bedienvorrichtung 3 weist weiterhin diverse Erhebungen 8 und Vertiefungen 9 auf.

## Patentansprüche

1. Bedienvorrichtung (3) zum Bedienen von zumindest einem elektrischen Gerät (6) in einem Kraftfahrzeug (1), mit einem Bedienelement (4) und mit einer Leiterplatte (11) mit einer ersten Seite (12), auf welcher ein Schaltelement (14) angeordnet ist, wobei bei einem Betätigen des Bedienelements (4) das Schaltelement (14) schaltbar ist,
wobei die Leiterplatte (11) zwischen dem Bedienelement (4) und dem Schaltelement (14) angeordnet ist, so dass die erste Seite (12) der Leiterplatte (11) dem Bedienelement (4) abgewandt ist und eine der ersten Seite (12) gegenüberliegende zweite Seite (13) dem Bedienelement (4) zugewandt ist, und die Bedienvorrichtung (3) ein separates Wippelement (20) aufweist, welches abhängig von einer Betätigung des Bedienelements (4) durch eine dadurch initiierte Wippbewegung (28) zur Betätigung des Schaltelements (14) ausgebildet ist, wobei das Wippelement (20) zumindest ein erstes Wippteil (22) und ein damit gelenkig verbundenes zweites Wippteil (23) aufweist und ein erstes Verbindungselement (17) der Bedienvorrichtung (3) mit dem ersten Wippteil (22) kontaktiert ist und ein zweites Verbindungselement (17) des Bedienvorrichtung (3) mit dem zweiten Wippteil (23) kontaktiert ist,
**dadurch gekennzeichnet, dass**
das Wippelement (20) mit einem Wippgelenk (21), an welchem das erste Wippteil (22) mit dem zweiten Wippteil (23) gelenkig verbunden ist, abhängig von einer Klappbewegung der Wippteile (22, 23), zum Schalten des Schaltelements (14) mit dem Schaltelement (14) koppelbar ist,
wobei das Bedienelement (4) zumindest ein Piktogramm (10) aufweist, wobei das Piktogramm (10) eine Funktion des bedienbaren elektrischen Geräts (6) beschreibt, wobei das Piktogramm (10) zumindest teilweise transparent ausgebildet ist und auf der zweiten Seite (13) der Leiterplatte (11) ein Leuchtelement (15) angeordnet ist, so dass das zumindest teilweise transparente Piktogramm (10) beleuchtbar ist.

2. Bedienvorrichtung (3) nach Anspruch 1,
**dadurch gekennzeichnet, dass**
das Wippelement (20) als eine einstückige Platte ausgebildet ist, wobei an einem ersten Ende des Wippelements (20) das Wippelement (20) mit einem Verbindungselement (17) und an einem zweiten Ende des Wippelements (20) mit dem Schaltelement (14) gekoppelt ist, so dass bei einem Betätigen des Bedienelements (4) eine Kraft auf das erste Ende des Wippelements (20) übertragbar ist und das Wippelement (20) um ein zwischen den Enden liegendes Wipplager (21') schwenkbar ist, so dass eine entstandene Hebelkraft auf das Schaltelement (14) am zweiten Ende des Wippelements (20) übertragbar ist.

3. Bedienvorrichtung (3) nach Anspruch 1,
**dadurch gekennzeichnet, dass**
das Bedienelement (4) zumindest ein Verbindungselement (17), insbesondere zwei Verbindungselemente (17), insbesondere vier Verbindungselemente (17), aufweist, mit welchem eine Betätigung des Bedienelements (4) an das Wippelement (20) übertragbar ist.

4. Bedienvorrichtung (3) nach Anspruch 1,
**dadurch gekennzeichnet, dass**
das Verbindungselement (17) stiftartig ausgebildet ist.

5. Bedienvorrichtung (3) nach Anspruch 1,
**dadurch gekennzeichnet, dass**
das Verbindungselement (17) sich beidseits der Leiterplatte (11), insbesondere durch eine Durchführung (18) in der Leiterplatte (11), erstreckt.

6. Bedienvorrichtung (3) nach einem der vorhergehenden Ansprüche,
**dadurch gekennzeichnet, dass**
die Bedienvorrichtung (3) zumindest einen kapazitiven Sensor (5) zum Erfassen einer Berührstelle eines Bedieners, insbesondere eines Fingers des Bedieners, auf einer Bedienoberfläche (7) des Bedienelements (4) aufweist.

7. Bedienvorrichtung (3) nach einem der vorhergehenden Ansprüche,
**dadurch gekennzeichnet, dass**
eine Bedienoberfläche (7) des Bedienelements (4) unterbrechungsfrei ausgebildet ist.

8. Bedienvorrichtung (3) nach Anspruch 5,
**dadurch gekennzeichnet, dass**
mittels der Bedienvorrichtung (3) eine Mehrzahl von elektrischen Geräten (6) bedienbar ist, wobei das Bedienelement (4) die Mehrzahl der elektrischen Geräte (6) als örtlich voneinander getrennte Piktogramme (10) anzeigt, und wobei die Bedienvorrichtung (3) eine Steuereinrichtung (16) aufweist, die auf Basis eines Signals eines kapazitiven Sensors (5), welches durch die unterschiedliche örtliche Betätigung eines der Piktogramme (10) durch einen Bediener, insbesondere dem Finger des Bedieners, erzeugbar ist, das jeweilige elektrische Gerät (6) bedient, insbesondere die Mehrzahl der Piktogramme (10) zumindest teilweise transparent ausgebildet ist und auf der zweiten Seite (13) der Leiterplatte (11) ein jeweiliges Leuchtelement (15) für ein jeweiliges Piktogramm (10) angeordnet ist, so dass das jeweilige zumindest teilweise transparente Piktogramm (10) beleuchtbar ist und das jeweilige Leuchtelement (15) in seiner Farbe und/oder in seiner Leuchtart unterschiedlich ist.

9. Bedienvorrichtung (3) nach einem der vorhergehenden Ansprüche,
**dadurch gekennzeichnet, dass**
das Schaltelement (14) als ein Mikroschalter oder eine Schaltmatte oder eine Schnappscheibe zum Erzeugen einer haptischen Rückmeldung ausgebildet ist.

10. Kraftfahrzeugbauteil mit einer Bedienvorrichtung (3) gemäß den Ansprüchen 1 bis 9.

11. Kraftfahrzeug (1) mit einem Kraftfahrzeugbauteil gemäß Anspruch 10.

## Claims

1. Operating apparatus (3) for operating at least one electrical appliance (6) in a motor vehicle (1), comprising an operating element (4) and comprising a circuit board (11) with a first side (12), on which a switching element (14) is arranged, wherein the switching element (14) is switchable when the operating element (4) is actuated,
wherein the circuit board (11) is arranged between the operating element (4) and the switching element (14) such that the first side (12) of the circuit board (11) faces away from the operating element (4) and a second side (13), lying opposite the first side (12), faces the operating element (4), and the operating apparatus (3) has a separate rocker element (20) which, depending on actuation of the operating element (4), is embodied to actuate the switching element (14) by a rocker movement (28) initiated by said actuation of the operating element, wherein the rocker element (20) has at least one first rocker part (22) and one second rocker part (23) connected thereto in hinged fashion and a first connecting element (17) of the operating apparatus (3) contacts the first rocker part (22) and a second connecting element (17) of the operating apparatus (3) contacts the second rocker part (23),
**characterized in that**
for the purposes of switching the switching element (14), the rocker element (20) is couplable to the switching element (14) by means of a rocker joint (21), at which the first rocker part (22) is connected to the second rocker part (23) in hinged fashion, depending on a folding movement of the rocker parts (22, 23),
Wherein the operating element (4) comprises at least one pictogram (10), wherein the pictogram (10) describes a function of the operable electrical appliance (6), wherein the pictogram (10) has an at least partly transparent embodiment and a lighting element (15) is arranged on the second side (13) of the circuit board (11) such that the at least partly transparent pictogram (10) is illuminable.

2. Operating apparatus (3) according to Claim 1,
**characterized in that**
the rocker element (20) is embodied as an integral plate, wherein the rocker element (20) is coupled to a connecting element (17) at a first end of the rocker element (20) and coupled to the switching element (14) at a second end of the rocker element (20) such that, when actuating the operating element (4), a force is transferable to the first end of the rocker element (20) and the rocker element (20) is pivotable about a rocker bearing (21') lying between the ends such that leverage that has arisen is transferable to the switching element (14) at the second end of the rocker element (20).

3. Operating apparatus (3) according to Claim 1,
**characterized in that**
the operating element (4) comprises at least one connecting element (17), in particular two connecting elements (17), in particular four connecting elements (17), by means of which an actuation of the operating element (4) is transferable onto the rocker element (20).

4. Operating apparatus (3) according to Claim 1,
**characterized in that**
the connecting element (17) has a pin-type embodiment.

5. Operating apparatus (3) according to Claim 1,
**characterized in that**
the connecting element (17) extends on both sides of the circuit board (11), in particular through a feedthrough (18) in the circuit board (11).

6. Operating apparatus (3) according to one of the preceding claims,
**characterized in that**
the operating apparatus (3) comprises at least one capacitive sensor (5) for detecting a point of contact by an operator, in particular a finger of the operator, on an operating surface (7) of the operating element (4).

7. Operating apparatus (3) according to one of the preceding claims,
**characterized in that**
an operating surface (7) of the operating element (4) has a seamless embodiment.

8. Operating apparatus (3) according to Claim 5,
**characterized in that**
a plurality of electrical appliances (6) are operable by means of the operating apparatus (3), wherein the operating element (4) displays the plurality of electrical appliances (6) as pictograms (10) that are spatially separated from one another, and wherein the operating apparatus (3) has a control device (16) that operates the respective electrical appliance (6) on the basis of a signal of a capacitive sensor (5), said signal being producible by the different spatial actuation of one of the pictograms (10) by an operator, in particular the finger of the operator, in particular wherein the plurality of pictograms (10) have an at least partly transparent embodiment and a respective lighting element (15) is arranged for a respective pictogram (10) on the second side (13) of the circuit board (11) such that the respective at least partly transparent pictogram (10) is illuminable and the respective lighting element (15) differs in terms of its colour and/or in terms of its illumination type.

9. Operating apparatus (3) according to one of the preceding claims,
**characterized in that**
the switching element (14) is embodied as a microswitch or a switching mat or a snap-action panel for producing haptic feedback.

10. Motor vehicle component comprising an operating apparatus (3) according to Claims 1 to 9.

11. Motor vehicle (1) comprising a motor vehicle component according to Claim 10.

## Revendications

1. Dispositif de commande (3) pour commander au moins un appareil électrique (6) dans un véhicule automobile (1), avec un élément de commande (4) et avec une carte à circuit imprimé (11) ayant un premier côté (12) sur lequel est agencé un élément de commutation (14), l'élément de commutation (14) étant apte à être commuté lorsque l'élément de commande (4) est actionné,
la carte à circuit imprimé (11) étant agencée entre l'élément de commande (4) et l'élément de commutation (14), de sorte que le premier côté (12) de la carte à circuit imprimé (11) soit orienté à l'opposé de l'élément de commande (4) et qu'un deuxième côté (13) opposé au premier côté (12) soit tourné vers l'élément de commande (4), et le dispositif de commande (3) présentant un élément à bascule (20) séparé, qui est conçu pour actionner l'élément de commutation (14) en fonction d'un actionnement de l'élément de commande (4) par un mouvement de bascule (28) initié par celui-ci, pour l'actionnement de l'élément de commutation (14), l'élément à bascule (20) présentant au moins une première partie basculante (22) et une deuxième partie basculante (23) reliée de manière articulée à celle-ci et un premier élément de liaison (17) du dispositif de commande (3) étant en contact avec la première partie basculante (22) et un deuxième élément de liaison (17) du dispositif de commande (3) étant en contact avec la deuxième partie basculante (23),
**caractérisé en ce que**
l'élément à bascule (20) est apte à être relié à une articulation à bascule (21), au niveau de laquelle la première partie basculante (22) est reliée de manière articulée à la deuxième partie basculante (23), en fonction d'un mouvement de rabattement des parties basculantes (22, 23), pour commuter l'élément de commutation (14) avec l'élément de commutation (14),
l'élément de commande (4) présentant au moins un pictogramme (10), le pictogramme (10) décrivant une fonction de l'appareil électrique (6) apte à être commandée, le pictogramme (10) étant réalisé au moins partiellement transparent et un élément d'éclairage (15) étant agencé sur le deuxième côté (13) de la carte à circuit imprimé (11), de sorte que le pictogramme (10) au moins partiellement transparent puisse être éclairé.

2. Dispositif de commande (3) selon la revendication 1, **caractérisé en ce que**
l'élément à bascule (20) est conçu sous la forme d'une plaque monobloc, l'élément à bascule (20) étant, à une première extrémité de l'élément à bascule (20), relié à un élément de liaison (17) et, à une deuxième extrémité de l'élément à bascule (20), à l'élément de commutation (14), de sorte que, lorsque l'élément de commande (4) est actionné, une force est apte à être transmise à la première extrémité de l'élément à bascule (20) et que l'élément à bascule (20) est apte à pivoter autour d'un palier de bascule (21') situé entre les extrémités, de sorte qu'une force de levier produite est apte à être transmise à l'élément de commutation (14) à la deuxième extrémité de l'élément à bascule (20).

3. Dispositif de commande (3) selon la revendication 1, **caractérisé en ce que**
l'élément de commande (4) présente au moins un élément de liaison (17), en particulier deux éléments de liaison (17), en particulier quatre éléments de liaison (17), grâce auquel un actionnement de l'élément de commande (4) est apte à être transmis à l'élément à bascule (20).

4. Dispositif de commande (3) selon la revendication 1, **caractérisé en ce que**
l'élément de liaison (17) est conçu sous la forme d'une broche.

5. Dispositif de commande (3) selon la revendication 1, **caractérisé en ce que**
l'élément de liaison (17) s'étend des deux côtés de la carte à circuit imprimé (11), en particulier à travers un passage (18) dans la carte à circuit imprimé (11).

6. Dispositif de commande (3) selon l'une des revendications précédentes,
**caractérisé en ce que**
le dispositif de commande (3) comporte au moins un capteur capacitif (5) pour détecter un point de contact d'un utilisateur, en particulier d'un doigt de l'utilisateur, sur une surface de commande (7) de l'élément de commande (4).

7. Dispositif de commande (3) selon l'une des revendications précédentes,
**caractérisé en ce que**
une surface de commande (7) de l'élément de commande (4) est réalisée de façon à être sans interruption.

8. Dispositif de commande (3) selon la revendication 5, **caractérisé en ce que**
une pluralité d'appareils électriques (6) est apte à être commandée au moyen du dispositif de commande (3), l'élément de commande (4) affichant la pluralité d'appareils électriques (6) sous forme de pictogrammes (10) séparés localement les uns des autres, et le dispositif de commande (3) présentant un dispositif de commande (16) qui, sur la base d'un signal provenant d'un capteur capacitif (5), qui est généré par l'actionnement local différent de l'un des pictogrammes (10) par un utilisateur, en particulier le doigt de l'utilisateur, commande l'appareil électrique (6) respectif, les pictogrammes de la pluralité des pictogrammes (10) étant en particulier au moins partiellement transparents et un élément d'éclairage respectif (15) pour un pictogramme respectif (10) est agencé sur le deuxième côté (13) de la carte à circuit imprimé (11), de sorte que le pictogramme respectif (10) au moins partiellement transparent puisse être éclairé et que l'élément d'éclairage respectif (15) soit différent dans sa couleur et/ou dans son mode d'éclairage.

9. Dispositif de commande (3) selon l'une des revendications précédentes,
**caractérisé en ce que**
l'élément de commutation (14) est conçu sous la forme d'un micro-interrupteur ou d'un tapis de commutation ou d'un disque à déclic pour générer un retour haptique.

10. Composant de véhicule automobile comportant un dispositif de commande (3) selon les revendications 1 à 9.

11. Véhicule automobile (1) avec un composant de véhicule automobile selon la revendication 10.
